# EUROPEAN PATENT APPLICATION

(11) **EP 0 613 230 A1**
(43) Date of publication of application: **31.08.1994**
(21) Application number: 93500021.6
(22) Date of filing: 23.02.1993
(51) Int. Cl.: H02K 49/04

(54) **Improvements on electric brakes for vehicles**

(71) Applicant: COMERCIAL DE FRENOS, S.A., E-28850 Torrejon de Ardoz (Madrid) (ES)
(72) Inventor: Carballo Rodriguez, Pablo, 2 Poligono Industrial, E-28850 Torrejon de Ardoz (Madrid) (ES)
(74) Representative: Carpintero Lopez, Francisco

(57) **Abstract**

The improvements consist in fixing the polar nucleus (1) of each coil to the chassis (2) of the brake through its polar plate (4), being this placed in the corresponding hole of the chassis, and being the thickness of the polar plate (4) greater than the thickness of the chassis (2). That and the feature of being fixed to the chassis by means of electric weld (6) allows the polar nucleus to be totally independent from the chassis (2) presenting itself in all of its length for the placement of the appropriate electromagnetic coil.

## Description

### OBJECT OF THE INVENTION

The present invention refers to improvements introduce to electric brakes for vehicles, like the electric brakes used on trucks, improvements desing for a better use of the polar nucleus, thus a better brake functioning.

### BACKGROUND OF THE INVENTION

Traditionally the electric brake of a vehicle was been placed on the transmission shaft of it, fractioning the transmission in order to establish a support chassis for a bearing on the electric brake, that is provided with an axial and cylindrical section from which a radial wall surfaces until medium level. This wall is provided with holes from which the polar nucleus go through over which the coils are placed. These coils are grap hold, axially and from the outside by the appropriate polar plates that enframe the mentioned nucleus.

Therefore, the mentioned chassis, to what is concern to it's support of the polar nucleus, form a plate that is crossed by the mentioned polar nucleus, in such a way that these polar nucleus adopt a symmetrical disposition with respect to the mentioned plate, to which the polar nucleus are fixed by electric welding or any other method. On a typical electric brake, there are 16 coils, 8 for each side of the mentioned plate or chassis.

Another known solution is to place the electric brake on the exit of the gear box, so the number of coils used is exactly half of the needed with the other disposition. At the same time, the polar nucleus in this new disposition are not place at the medium level of the chassis but through one of its sides.

Of the two solutions metioned above, the second one clearly presents an extrordinary reduction of the number of coils used, but both of them present the problem that an important part of both polar nucleus are used to attach them to the chassis and therefore, such nucleus becomes partially unprofitable to what refers to the placement of the coil over it.

### DESCRIPTION OF THE INVENTION

The improvements that the invention presents are applicable to electric brakes for vehicles of the second mentioned type. Therefore for the ones where that the electric brake is mounted at the exit of the gear box, on which the polar nucleus are fix to one of it's sides and on which only half of coils are needed.

On a more simple form, the improvements of the invention focus on the fact that the fixation of the polar nucleus to the chassis is not done directly as is usual, but through the corresponding polar plate, so that the polar nucleus could be totally used for the implatation of the correspoondig coil.

Obviously, in order to have a feasible result of the assembly, the polar plate must have a superior thickness than of the chassis and same is integrated with the chassis fixed to the sides of the holow space that must be available, for the polar plate.

### DESCRIPTION OF THE DRAWINGS

In order to provide a fuller description and to contribute to the complete understanding of the characteristics of the invention, a set of drawings is attached to the specification which, while purely illustrative and not fully comprehensive, shows the following:
Figure 1.- Shows an elevation section view of the assembly of a polar nucleus to the chassis of a electric brake for conventional vehicles forecast to be assemble on the exit side of the gear box.
Figure 2.- Shows the same of the above figure but corresponding to an electric brake done in accordance with the improvements introduced and object of this invention.
Figure 3 and 4.- Finally show, an elevation side 1/4 section view of two examples of the assemblage of the electric brakes for vehicles, with the improvements object of this invention.

### PREFERRED EMBODIMENT OF THE INVENTION

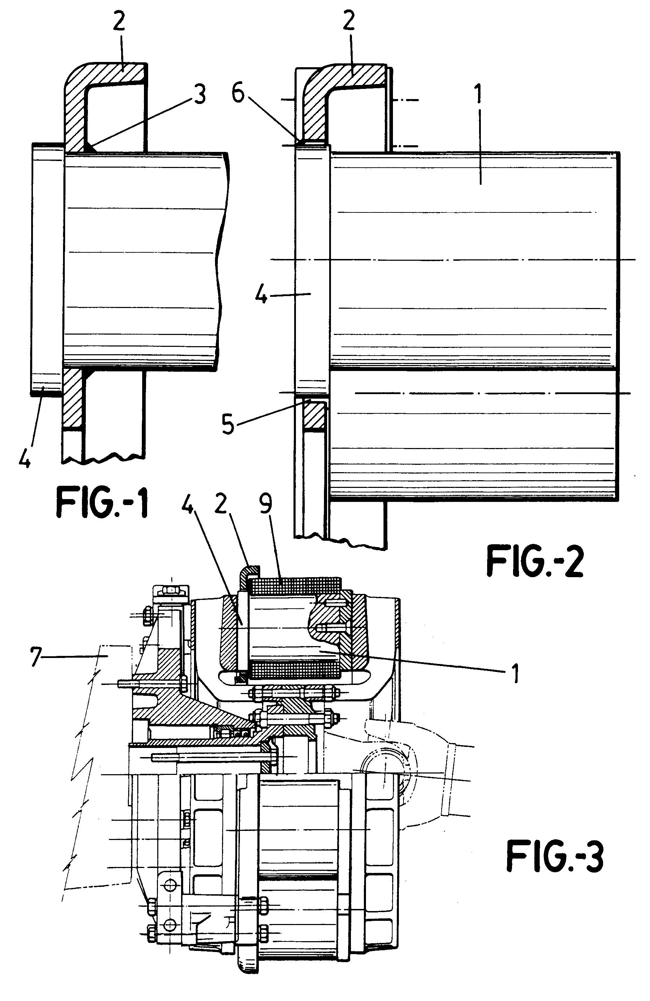

As it has been said, the figure 1 shows a detail of a conventional brake for destine to be assembled on the exit of the gear box of a vehicle, it is also visible how the polar nucleus (1) goes through the chassis (2), and fix to it by electric weld (3) in such a way that the polar plate (4) is placed on the other side of the mentioned chassis (2) and opposite to the gear box. Obviously, at the time of establishing the apropiate coil in the polar nucleus (1), there is an unprofitable space available for the axial section of it, that is placed in the hole of the chassis.

The improvements of the invention shown on figure 2, consist on the use as a way of fixing the polar nucleus (1) to the chassis (2) the polar plate (4) joint to the polar nucleus (1), in such a way that the mentioned nucleus (1) becomes absolutely independent of the chassis (2) in all of its length.

The polar plate (4) is integrated on the chassis (2) by being placed inside of the hole (5) of the chassis, and it is fixed to the polar nucleus (1) with electric welding (6) and as it is also shown on figure 2 the polar plate (4), must be thicker than the chassis (2), in order to achieve the total independence of the polar nucleus (1) from the chassis (2).

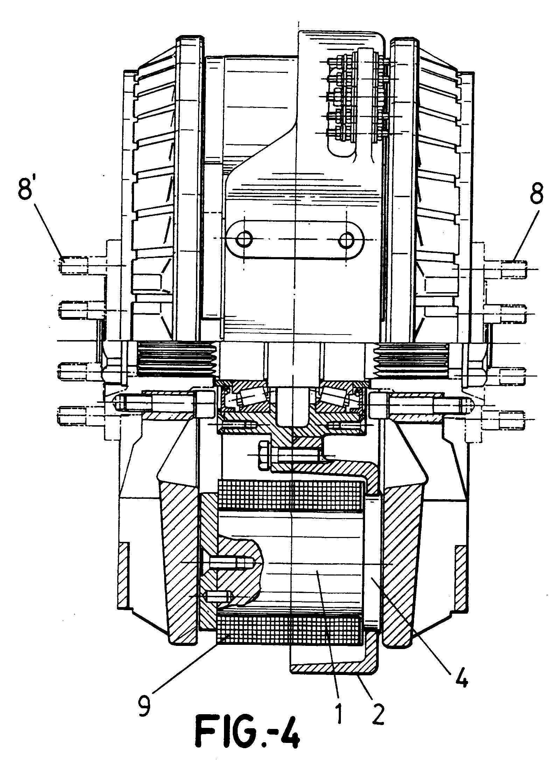

In accordance with this structuration and as it is observed on any of figures 3 and 4, as well as when the electric brake is forecast to be placed on the exit of a gear box (7), as shown on figure (3), and when it is forecast to be insert in the transmission shaft of a vehicle, counting to that effect, with the classical means of assemblage (8-8') to the two sections of the mentioned transmission, each polar nucleus (1) is usable for the placement of the appropiate coil (9), and this maximum exploitation of the nucleus length increases the effectiveness of the brake.

## Claims

1. Improvements on electric brakes for vehicles, specially of electric brakes on which the carrier chassis of the polar nucleus for the corresponding coils recieves such nucleus by one of its sides, characterized in that the polar nucleus (1) is used totally in its length for the placement of a coil (9), doing it by the integration of the polar plate (4) of each polar nucleus (1) to the chassis (2), so the polar plate (4) is place on the hole (5) of the chassis (2), fixing it by electric weld or by any other appropriate way and being the thickness of the polar plate (4) greater than the thickness of the chassis (2), with the purpose of fixing it to the chassis by electric weld (6), or other appropriate method, and so the polar nucleus (1) results totally independent from the chassis (2).
